(19) Europäisches Patentamt
European Patent Office
Office européen des brevets

(11) **EP 3 335 572 B1**

(12) **FASCICULE DE BREVET EUROPEEN**

(45) Date de publication et mention
de la délivrance du brevet:
**20.09.2023 Bulletin 2023/38**

(21) Numéro de dépôt: **17207866.9**

(22) Date de dépôt: **15.12.2017**

(51) Classification Internationale des Brevets (IPC):
**A23K 20/163** [(2016.01)] **A23K 50/30** [(2016.01)]
**A23K 20/10** [(2016.01)]

(52) Classification Coopérative des Brevets (CPC):
(C-Sets disponibles)
**A23K 50/30; A23K 20/10; A23K 20/163;**
A23K 50/00; A23V 2002/00 (Cont.)

(54) **ALIMENT COMPLET POUR ANIMAL POUR REDUIRE LA PROBLEMATIQUE D'ODEUR ET/OU DE GOÛT LIEE A LA PRESENCE DE SCATOL ET/OU D'ANDROSTENONE ET/OU D'INDOL, EN PARTICULIER POUR REDUIRE LA PROBLEMATIQUE D'ODEUR DE VERRAT**

VOLLWERTIGES NAHRUNGSMITTEL FÜR TIERE ZUR REDUZIERUNG DES PROBLEMATISCHEN GERUCHS UND/ODER GESCHMACKS DURCH VORHANDENSEIN VON SKATOL UND/ODER ANDROSTERON UND/ODER INDOL, INSBESONDERE ZUR REDUZIERUNG DES PROBLEMATISCHEN EBERGERUCHS

COMPLETE FEED FOR ANIMALS TO REDUCE PROBLEMS OF SMELL AND/OR FLAVOUR LINKED TO THE PRESENCE OF SKATOLE AND/OR ANDROSTENONE AND/OR INDOLE, IN PARTICULAR FOR REDUCING THE PROBLEM OF BOAR TAINT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2016 BE 201605940**

(43) Date de publication de la demande:
**20.06.2018 Bulletin 2018/25**

(73) Titulaires:
• **Dumoulin**
**5300 Seille (BE)**
• **Dumoulin**
**8500 Kortrijk (BE)**
• **AVEVE**
**3000 Leuven (BE)**
• **Feedcam**
**3053 Haasrode (BE)**

(72) Inventeurs:
• **HARDY, Nicolas**
**4837 Baelen (BE)**
• **REUTER, Werner**
**4761 Rocherath (BE)**
• **JANSSENS, Guido**
**1320 Tourinnes-la-Grosse (BE)**

(74) Mandataire: **Calysta NV**
**Lambroekstraat 5a**
**1831 Diegem (BE)**

(56) Documents cités:
**US-A1- 2009 068 296**

• **M. ØVERLAND ET AL: "Easily fermentable carbohydrates reduce skatole formation in the distal intestine of entire male pigs", LIVESTOCK SCIENCE, vol. 140, no. 1-3, 1 septembre 2011 (2011-09-01), pages 206-217, XP055347710, NL ISSN: 1871-1413, DOI: 10.1016/j.livsci.2011.03.032**
• **KNARREBORG A ET AL: "Effect of non-starch polysaccharides on production of indolic compounds in entire male pigs", ANIMAL SCIENCE, DURRANT, GB, vol. 74, no. 3, 1 janvier 2002 (2002-01-01), pages 445-453, XP008025386, ISSN: 1357-7298**

**(Cont. page suivante)**

EP 3 335 572 B1

- HANSEN L L ET AL: "Effect of feeding fermentable fibre-rich feedstuffs on meat quality with emphasis on chemical and sensory boar taint in entire male and female pigs", MEAT SCIENCE, ELSEVIER SCIENCE, GB, vol. 80, no. 4, 1 décembre 2008 (2008-12-01), pages 1165-1173, XP025465899, ISSN: 0309-1740, DOI: 10.1016/J.MEATSCI.2008.05.010 [extrait le 2008-05-23]
- RAFFAEL WESOLY ET AL: "Nutritional Influences on Skatole Formation and Skatole Metabolism in the Pig", ANIMALS, vol. 2, no. 4, 2 mai 2012 (2012-05-02), pages 221-242, XP055347797, DOI: 10.3390/ani2020221
- K. R. MATTHEWS ET AL: "Effect of whole linseed (Linum usitatissimum) in the diet of finishing pigs on growth performance and on the quality and fatty acid composition of various tissues", BRITISH JOURNAL OF NUTRITION, vol. 83, no. 06, 1 juin 2000 (2000-06-01), page 637, XP055347762, UK ISSN: 0007-1145, DOI: 10.1017/S0007114500000817
- "Linafiber", INTERNET CITATION, 2008, pages 1-3, XP002544167, Extrait de l'Internet: URL:http://beneo-an.boulevart.be/Our-produ cts/Specialised/Linafiber [extrait le 2009-09-03]
- ALUWE M ET AL: "Absence of an effect of dietary fibre or clinoptilolite on boar taint in entire male pigs fed practical diets", MEAT SCIENCE, ELSEVIER SCIENCE, GB, vol. 82, no. 3, 1 juillet 2009 (2009-07-01), pages 346-352, XP026040411, ISSN: 0309-1740, DOI: 10.1016/J.MEATSCI.2009.02.001 [extrait le 2009-02-12]

(52) Classification Coopérative des Brevets (CPC): (Cont.)

C-Sets
A23V 2002/00, A23V 2200/32, A23V 2200/3202, A23V 2200/3204, A23V 2250/60

**Description**

La présente invention se rapporte à un aliment complet pour animal, en particulier à un aliment complet pour animal de la famille des suidés, pour réduire la problématique d'odeur et/ou de goût liée à la présence de scatol et/ou d'androsténone et/ou d'indol, en particulier pour réduire la problématique d'odeur de verrat.

Une problématique récurrente de la présence de scatol et/ou d'androsténone et/ou d'indol est l'odeur de verrat, « odeur sexuelle » ou encore « boar taint ». Il s'agit d'une odeur forte et désagréable essentiellement dégagée lors de la cuisson de viande de porc, en particulier lors de la cuisson de la viande issue de porcs mâles pubères mais aussi, dans une moindre mesure, lors de la cuisson de viandes obtenues au départ de truies ou de castrats. Cette odeur s'explique par une accumulation dans la viande et dans les tissus adipeux d'androsténone, de scatol et, dans une moindre mesure, d'indol (un dérivé du scatol), ces composés étant lipophiles. Concrètement, l'odeur de verrat pose des problèmes olfactifs mais aussi des problèmes gustatifs (de goût) puisque les viandes concernées ont une odeur et un goût anormaux. Il en résulte que certaines viandes de porc produites sont considérées comme étant impropres à la consommation par une large partie de la population, ce qui entraîne des pertes considérables et une non valorisation à sa juste valeur des viandes obtenues par les producteurs.

L'androsténone est un stéroïde testiculaire coproduit avec la testostérone chez les porcs mâles pubères. Ce composé est perçu par l'odorat humain comme étant un composé sentant l'urine, la transpiration et l'ammoniac.

Le scatol (ou 3-méthylindol), qui est responsable de l'odeur de verrat, est couramment considéré comme étant un produit de dégradation du tryptophane par certaines bactéries du tractus intestinal, tant chez les porcs mâles entiers (non castrés) que chez les porcs castrés (castrats) ou encore chez les truies. Il est important de préciser que le taux de scatol est nettement plus élevé dans le gras et dans la viande issus de porcs mâles entiers dès lors que les stéroïdes testiculaires en inhibent fortement la dégradation au niveau du foie. Notons que l'odeur du scatol perçue par l'odorat humain est associée à celle des fèces.

Comme indiqué plus haut, la problématique relative à l'odeur de verrat se pose essentiellement lors de la cuisson de la viande et concerne en moyenne la viande de 2 à 20% des porcs mâles entiers. Notons que la problématique d'accumulation de scatol se pose également chez les truies voire même chez les castrats bien que dans une moindre mesure, ceci notamment à cause de facteurs environnementaux. Certains consommateurs particulièrement sensibles à cette odeur considèrent tout simplement que la viande est impropre à la consommation même si la transformation de la viande en produits de type charcuterie peut minimiser l'odeur de verrat.

Le secteur de la viande porcine est donc confronté depuis plusieurs années, et d'autant plus depuis que des alternatives sont recherchées pour remplacer la castration chez les porcs mâles pour répondre à des questions de bien-être animal et d'éthique, à une réelle problématique quant à la viande issue des porcs mâles entiers, cette viande ne pouvant pas toujours être valorisée comme il se devrait à cause d'une présence excessive en scatol et/ou en androsténone et/ou en indol.

Pour faire face à cette problématique, plusieurs approches ont été envisagées telles que des approches génétiques, zootechniques (alimentation, âge à l'abattage, conduite du cheptel, ...) ou encore immunitaires.

Classiquement, la méthode employée pour éviter l'odeur de verrat était la castration chirurgicale des porcelets mâles dès leurs premières semaines de vie. En plus d'être largement controversée pour des raisons éthiques tant par les consommateurs que par les distributeurs, cette technique présente quelques inconvénients majeurs : risques d'infections et viande plus grasse par dépôt de lipides au détriment de la fixation de protéines. Face à des problèmes d'éthiques grandissants et afin de respecter le bien-être animal, les filières porcines européennes se sont engagées dans une démarche volontaire d'abandon de la castration chirurgicale des porcelets mâles dès 2018.

Une autre piste consiste en la « castration chimique » ou « immuno-castration » qui repose sur l'injection d'un vaccin (Improvac®) induisant une réponse immunitaire à la gonadolibérine responsable du développement testiculaire. Les porcs vaccinés présentent donc une atrophie testiculaire et il en résulte des concentrations moindres en scatol et en androsténone dans la viande puisque moins de stéroïdes testiculaires sont en mesure d'inhiber la dégradation du scatol au niveau du foie. Toutefois, si cette technique semble solutionner au moins partiellement la problématique de l'odeur de verrat, l'innocuité d'un tel vaccin pose toujours question par apport au consommateur d'une viande ainsi obtenue. Il convient donc ici aussi de trouver une alternative à cette technique d'immuno-castration.

Au vu de ceci, la politique en matière d'élevage porcin se tourne de plus en plus vers l'élevage de mâles entiers et des alternatives à la castration chirurgicale ou chimique ont donc été peu à peu développées. Parmi celles-ci, plusieurs études ont ciblé l'alimentation des porcs avec pour objectif que l'aliment consommé contribue à une réduction des concentrations en scatol et/ou en androsténone et/ou en indol dans les viandes obtenues suite à l'abattage de porcs mâles entiers.

Comme indiqué plus haut, le scatol est considéré comme étant un produit de dégradation des protéines et en particulier du tryptophane par certaines bactéries du tractus intestinal. Toutefois, les avis divergent encore quant aux causes exactes de la présence de tryptophane dans le tractus digestif puisque certains attribuent cette présence exclusivement à la dégénérescence et à la mort des cellules épithéliales coliques tandis que d'autres mettent en avant des causes alimentaires dont le tryptophane. Des approches de modifications et de supplémentations des aliments classiques utilisés en phase d'engraissement ont été développées afin d'essayer de réduire la présence de scatol et/ou d'androsténone et/ou d'indol dans les viandes obtenues.

La digestion des protéines chez les monogastriques, et donc chez les porcs, repose d'abord sur une digestion s'effectuant au niveau de l'estomac qui constitue un environnement acide entraînant une dénaturation des protéines par hydrolyse sous l'action de pepsines. Les digesta arrivant ensuite dans l'intestin subissent encore une hydrolyse par action du suc pancréatique qui contient plusieurs protéases et par action des aminopeptidases et des dipeptidases intestinales.

L'absorption des produits de ces hydrolyses a lieu dans la partie supérieure de l'intestin grêle et tous les produits non digérés dans l'intestin grêle gagnent le gros intestin où ils sont soumis à l'action des microorganismes en entraînant une fermentation.

Dans le gros intestin, notamment chez les porcs, on distingue d'une part une fermentation de type saccharolytique et, d'autre part, une fermentation de type protéolytique, ces deux types de fermentation se réalisant en parallèle. Si la fermentation saccharolytique est bénéfique, il n'en est pas de même pour la fermentation protéolytique. En effet, la première donne lieu à la formation d'acides gras volatils tels que l'acide butyrique et l'acide propionique qui sont notamment utiles pour la métabolisation du glucose dans le foie. Par contre, la deuxième assure la dégradation des protéines et des acides aminés non absorbés dans l'intestin grêle, notamment la dégradation du tryptophane, ce qui, dans le cas présent, est dommageable puisqu'il en résulte une production de scatol. En outre, la fermentation protéolytique est également responsable de la formation de phénol, de crésol, de cadavérine, de putrescine ou encore d'ammoniac, ces composés n'étant pas bénéfiques pour l'animal.

Un aliment tel qu'indiqué au début et élaboré pour réduire la problématique d'odeur de verrat est connu du document EP1610623. Ce document décrit la mise en oeuvre de rations alimentaires à base de concentré organique (colza, pois, blé, orge, avoine, soja, vitamines, sels, phosphate de calcium et calcaire) supplémentées avec des racines (fraiches ou séchées) de chicorées ou avec de l'inuline. Au travers d'analyses chimiques (de type GC-MS) et d'essais sensoriels (olfactifs) réalisés sur les viandes obtenues au départ de porcs mâles entiers nourris en phase d'engraissement avec un tel aliment, ce document antérieur fait ressortir que les concentrations en scatol sont réduites alors qu'une réduction non significative des concentrations en androsténone est observée dans les viandes analysées après abattage.

Malheureusement, avec un tel aliment selon le document EP1610623, les concentrations en scatol dans les viandes obtenues au départ de porcs mâles entiers ne sont pas encore suffisamment réduites. De ce fait, les consommateurs particulièrement sensibles à l'odeur de verrat peuvent toujours en détecter la présence et peuvent considérer malgré tout que ces viandes sont impropres à la consommation. Il en résulte que les viandes obtenues avec un aliment selon ce document antérieur ne sont pas pour autant systématiquement valorisables comme il se devrait même si la concentration en scatol y est pourtant réduite.

Overland et collaborateurs, Livestock Science 2011, pages 206-217, décrivent une alimentation à base de céréales, enrichie en inuline de manière à réduire la quantité de scatol dans la viande de porc. Malheureusement, les quantités d'inuline les plus importantes ont des effets délétères sur l'intestin. En outre, cette publication ne décrit ni ne suggère l'addition de graines de lin ou de certains hépatoprotecteurs.

De même, Knarreborg et collaborateurs, Animal Science, 2002, pages 445-453 ont ajouté 100 g/kg de pulpe de betterave sucrière à une alimentation à base de céréales dans le but de réduire la teneur en scatol chez le porc. Des réductions du taux de scatol sanguin et au niveau des déjections ont été mesurées dans les conditions où la pulpe de betterave a été ajoutée. Cependant cette référence ne montre pas de réduction de la teneur en scatol dans les tissus adipeux. Cette publication ne décrit ni ne suggère l'addition de graines de lin ou d'hépatoprotecteurs pas plus que de l'amidon résistant fermentescible.

Hansen et collaborateurs, Meat Science 2008, Vol. 80, pages 1165-1173 décrivent l'addition de 25% de graines de lupin ou > 10% de racines de chicorée séchée, de manière à réduire l'odeur de verrat. Le régime alimentaire supplémenté en graines de lupin a permis de réduire la concentration en scatol, cependant, cela a réduit l'assimilation des aliments.

Il existe donc un réel besoin à ce jour, pour se conformer dès 2018 à la volonté d'abandon de la castration chirurgicale des porcelets mâles et pour proposer une réelle alternative à l'immuno-castration, de procurer un aliment permettant d'éliminer la problématique liée à l'odeur de verrat de telle sorte qu'au moins la concentration en scatol et/ou en androsténone et/ou en indol soit si infime qu'elle ne gêne plus qu'un nombre non significatif de consommateurs, c'est-à-dire seulement une infime partie de la population.

L'invention a pour but de pallier les inconvénients de l'état de la technique en procurant un aliment permettant de réduire plus encore la concentration en scatol et/ou en androsténone et/ou en indol dans les viandes obtenues au départ de porcs mâles entiers.

Pour résoudre ce problème, il est prévu suivant l'invention, un aliment tel qu'indiqué au début, caractérisé en ce qu'il comprend au moins un hydrate de carbone non amylacé et de l'amidon résistant fermentescibles dans le gros intestin, de telle sorte qu'une fraction dudit aliment définie par ledit au moins un hydrate de carbone non amylacé et/ou de ledit amidon résistant fermentescibles dans le gros intestin représente une quantité en poids supérieure à 140 g/kg d'aliment, avantageusement supérieure à 150 g/kg d'aliment, de préférence supérieure à 160 g/kg d'aliment, préférentiellement supérieure à 170 g/kg d'aliment, plus préférentiellement supérieure à 180 g/kg d'aliment, plus préférentiellement encore supérieure à 190 g/kg d'aliment. Suivant l'invention, cet aliment comprend en outre des graines de lin, en particulier des graines de lin extrudées.

Par les termes « amidon résistant », on entend, au sens de la présente invention, un amidon qui n'est pas ou très peu soumis à la digestion enzymatique s'opérant par les amylases essentiellement dans l'intestin grêle, ceci au contraire d'un amidon classique qui est digéré à hauteur de 99% dans l'intestin grêle. Plus particulièrement, au sens de la présente invention un « amidon résistant » est un amidon physiquement non accessible par les enzymes présentes dans l'intestin grêle soit parce qu'il est protégé (enfermé) naturellement dans une matrice fibreuse cellulose-lignine, soit parce qu'il a subi un traitement particulier lui conférant une résistance aux enzymes présentes dans l'intestin grêle, soit parce qu'il contient une haute teneur en amylose naturellement résistante à l'action des enzymes présentes dans l'intestin grêle.

En ce sens, il existe donc plusieurs formes d'amidon résistant :

- l'amidon indisponible dans l'intestin grêle (physiquement non atteignable) ou non digestible présent au niveau de l'endosperme de végétaux ou de parties de végétaux (légumineuses, grains entiers, ...) ;
- l'amidon difficilement disponible du fait de la structure compacte des granules d'amidon (amylose), comme c'est par exemple le cas pour le maïs, les pommes de terres et les bananes ;
- l'amidon rétrogradé suite à par exemple à un traitement thermique et/ou chimique.

Dans le cadre de la présente invention, la méthode de référence AOAC Method 2002.02 . AACC Method 32-40.01 est la méthode de référence pour mesurer la quantité d'amidon résistant (fermentescible dans le gros intestin) qui correspond à l'amidon non hydrolysé par incubation avec une amylase pancréatique. Selon cette méthode de référence, après hydrolyse enzymatique avec une amylase pancréatique, les produits de l'hydrolyse sont solubilisés dans de l'éthanol à 80 % et sont éliminés. L'amidon résistant est alors solubilisé dans du KOH (4 mole/l), puis hydrolysé par l'amyloglucosidase. Le glucose libéré est finalement analysé par spectrométrie d'absorption moléculaire à 365 nm. Notons que la teneur en amidon résistant des matières végétales (des plantes) peut varier de façon conséquente entre variétés de la même espèce.

Par ailleurs, dans le cadre de la présente invention, la quantité dudit au moins un hydrate de carbone non amylacé (potentiellement fermentescible dans le gros intestin) ou valeur dNSP (digestible non starch polysaccharide) est déterminée pour chaque ingrédient de l'aliment (complet ou complémentaire) au départ des tables du CVB (Central Bureau Livestock Feeding, Pays-Bas) établies en 2016.

Pour chaque matière première, la valeur dNSP, c'est-à-dire la quantité dudit au moins un hydrate de carbone non amylacé, est calculée à l'aide de l'équation suivante établie par le CVB :

$$dNSP = VOS - VRE - VRVET - ZETam - [\text{facteur correctif} * SUI]$$

où VOS correspond à la matière organique digestible,

VRE correspond à la protéine digestible,
VRVET correspond à la matière grasse digestible,
ZETam correspond à l'amidon total, et
SUI correspond aux sucres totaux.

La valeur ZETam est déterminée par une méthode enzymatique selon la norme ISO/DIS 15914:2004. Dans cette méthode, les sucres sont éliminés par ajout d'éthanol, ensuite du diméthylsulfoxyde est ajouté pour disperser l'amidon, qui est ensuite coupé par une amyloglucosidase. Le glucose ainsi libéré est dosé à l'aide d'une hexokinase.

Précisons que, pour les différents constituants d'un aliment selon l'invention, il est fait référence aux tables de l'année 2016 établies par le CVB pour établir les différentes valeurs propres à chacun de ces constituants (teneur en hydrate de carbone, teneur en matière grasse, ...).

Par les termes « fraction dudit aliment définie par ledit au moins un hydrate de carbone non amylacé et/ou ledit amidon résistant fermentescibles dans le gros intestin », on entend, au sens de la présente invention, la fraction formée par ces composés, contenue dans l'aliment et gagnant effectivement le gros intestin où ces composés peuvent alors être effectivement fermentés au moins en partie.

Dans le cadre de la présente invention, il a été déterminé qu'un aliment dont une fraction définie par au moins un hydrate de carbone non amylacé et de l'amidon résistant fermentescibles dans le gros intestin représente une quantité en poids supérieure à 140 g/kg d'aliment, avantageusement supérieure à 150 g/kg d'aliment, de préférence supérieure à 160 g/kg d'aliment, préférentiellement supérieure à 170 g/kg d'aliment, plus préférentiellement supérieure à 180 g/kg d'aliment, plus préférentiellement encore supérieure à 190 g/kg d'aliment, permet de réduire significativement et d'au moins un facteur 4 la concentration en scatol dans les viandes obtenues au départ de porcs mâles entiers nourris avec cet aliment, ceci en assurant une production de viande optimale et sans que les porcs ne soient carencés en l'un ou l'autre des nutriments essentiels comme par exemple les oligo-nutriments ou les acides aminés essentiels (dont le tryptophane). Il a en outre été déterminé qu'un aliment selon l'invention permet d'orienter les fermentations ayant lieu dans le gros intestin en faveur d'une fermentation saccharolitique qui, au contraire d'une fermentation protéolytique, donne lieu à des produits de dégradation bénéfiques.

Dans le cadre de la présente invention, il a été déterminé qu'un aliment dont une fraction définie par au moins un hydrate de carbone non amylacé fermentescible dans le gros intestin représente une quantité en poids supérieure à 140 g/kg d'aliment, avantageusement supérieure à 150 g/kg d'aliment, de préférence supérieure à 160 g/kg d'aliment, préférentiellement supérieure à 170 g/kg d'aliment, plus préférentiellement supérieure à 180 g/kg d'aliment, plus préférentiellement encore supérieure à 190 g/kg d'aliment, permet de réduire significativement et d'au moins un facteur 4 la concentration en scatol dans les viandes obtenues au départ de porcs mâles entiers nourris avec cet aliment, ceci en assurant une production de viande optimale et sans que les porcs ne soient carencés en l'un ou l'autre des nutriments essentiels comme par exemple les oligo-nutriments ou les acides aminés essentiels (dont le tryptophane). Il a en outre été déterminé qu'un aliment selon l'invention permet d'orienter les fermentations ayant lieu dans le gros intestin en faveur d'une fermentation saccharolitique qui, au contraire d'une fermentation protéolytique, donne lieu à des produits de dégradation bénéfiques.

Dans le cadre de la présente invention, il a été déterminé qu'un aliment dont une fraction définie par de l'amidon résistant fermentescible dans le gros intestin représente une quantité en poids supérieure à 10 g/kg d'aliment, avantageusement supérieure à 20 g/kg d'aliment, de préférence supérieure à 30 g/kg d'aliment, préférentiellement supérieure à 40 g/kg d'aliment, préférentiellement supérieure à 45 g/kg d'aliment permet de réduire significativement et d'au moins un facteur 4 la concentration en scatol dans les viandes obtenues au départ de porcs mâles entiers nourris avec cet aliment, ceci en assurant une production de viande optimale et sans que les porcs ne soient carencés en l'un ou l'autre des nutriments essentiels comme par exemple les oligo-nutriments ou les acides aminés essentiels (dont le tryptophane). Il a en outre été déterminé qu'un aliment selon l'invention permet d'orienter les fermentations ayant lieu dans le gros intestin en faveur d'une fermentation saccharolitique qui, au contraire d'une fermentation protéolytique, donne lieu à des produits de dégradation bénéfiques.

Par ailleurs, il a été déterminé que les experts formés à la détection de l'odeur de verrat ne la perçoivent plus de façon significative lorsque les viandes leur étant soumises sont obtenues au départ de porcs mâles entiers nourris avec cet aliment suivant l'invention.

En outre, il a été déterminé, en parallèle avec une diminution significative de la concentration en scatol, qu'une tendance marquée de réduction en indol est observée dans les viandes obtenues au départ de porcs mâles entiers nourris avec l'aliment selon l'invention.

Notons encore qu'une réduction (non significative) de la concentration en androsténone a également été relevée, ce qui est surprenant puisque plusieurs études portant sur une modification du régime alimentaire afin de réduire l'odeur de verrat n'ont jamais pu démontrer l'impact positif d'un aliment sur cette problématique.

Avantageusement, l'aliment selon l'invention présente une quantité en poids de fibres insolubles dans un détergent acide (ADF) inférieure à 90 g/kg d'aliment, de préférence inférieure à 85 g/kg d'aliment, préférentiellement inférieure à 80 g/kg d'aliment, plus préférentiellement inférieure à 75 g/kg d'aliment. Dans le cadre de la présente invention, la quantité en poids de fibres insolubles dans un détergent acide (ADF) a été déterminée selon la méthode AOAC 973.18 et la norme ISO 13906:2008. Il a été mis en évidence, dans le cadre de la présente invention, qu'une telle valeur ADF permet de limiter la quantité et la présence de fibres non fermentescibles dans le gros intestin, ce qui contribue à l'optimisation d'un aliment selon l'invention.

Avantageusement, l'aliment selon l'invention présente une quantité en poids de fibres solubles dans un détergent acide (ADF) inférieure à 90 g/kg d'aliment, de préférence inférieure à 85 g/kg d'aliment, préférentiellement inférieure à 80 g/kg d'aliment, plus préférentiellement inférieure à 75 g/kg d'aliment. Dans le cadre de la présente invention, la quantité en poids de fibres solubles dans un détergent acide (ADF) a été déterminée selon la méthode AOAC 973.18 et la norme ISO 13906:2008. Il a été mis en évidence, dans le cadre de la présente invention, qu'une telle valeur ADF permet de limiter la quantité et la présence de fibres non fermentescibles dans le gros intestin, ce qui contribue à l'optimisation d'un aliment selon l'invention.

De préférence, selon l'invention, ladite fraction présente, lorsqu'elle comprend à la fois au moins un hydrate de carbone et de l'amidon résistant fermentescibles dans le gros intestin, un ratio hydrate de carbone non amylacé / amidon résistant égal à 8,5, avantageusement un ratio égal à 7, de préférence un ratio égal à 6, préférentiellement un ratio égal à 5, plus préférentiellement un ratio égal à 4, plus préférentiellement encore un ratio égal à 3, de façon encore plus préférentielle un ratio égal à 2.

De préférence, lorsque l'aliment selon l'invention comprend des pulpes de betterave, de Citrus (agrumes), de pommes de terre et/ou de chicorée, la quantité en poids de ces pulpes est au maximum de 40 g/kg d'aliment, de préférence au maximum de 30 g/kg d'aliment. En effet, il est préférable de limiter l'apport en pulpes de betterave, de Citrus (agrumes), de pommes de terre et/ou de chicorée en de telles quantités dès lors que les porcs consomment une grande quantité d'aliment en phase de finition et que ces pulpes constituent un apport important en fibres gonflables par absorption d'eau. Il a en effet été constaté que ces pulpes gonflables sont responsables d'une augmentation en volume des organes du tractus digestif, ce qui diminue en final considérablement le rendement à l'abattage (poids de la carcasse/poids de l'animal).

Préférentiellement, selon l'invention, ledit au moins un hydrate de carbone fermentescible dans le gros intestin, est choisi dans le groupe constitué des monosaccharides tels que le xylose, le mannose, l'arabinose, le rhamnose et le fucose, des disaccharides tels que le lactose, des polyols tels que l'isomalt, le maltitol, le sorbitol, le xylitol et l'érythritol, des oligosaccharides tels que les fructo-oligosaccharides, les malto-oligosaccharides, et les galacto-oligosaccharides, des polysaccharides non-amylacés ou fibres alimentaires tels que la cellulose, les polymères de glucose, les substances pectiques, les β-glucanes et les hémicelluloses comme les hétéropolymères d'arabinose ou de xylose, des gommes et des fructanes comme l'inuline et leurs mélanges.

Avantageusement, selon l'invention, ledit au moins un hydrate de carbone fermentescible dans le gros intestin, est présent dans une matière première ou dans un extrait d'une matière première étant choisie dans le groupe constitué de l'orge, du rebulet d'orge, d'orge issu de malterie, de radicelles d'orge, de drêches d'orge, de son d'orge, du maïs, de drêches de maïs, de rafles de maïs, de rebulet de maïs, de son de maïs, de gluten feed de maïs, d'épis de maïs, de l'avoine, de rebulet d'avoine, de son d'avoine, de cosses d'avoine, de gruau d'avoine, du riz, du son de riz, de rebulet de riz, de drêches de riz, de germes de riz expeller, du seigle, de rebulet de seigle, de son de seigle, du sorgho, de l'épeautre, du son d'épeautre, des cosses d'épeautre, de rebulet d'épeautre, du triticale, du blé, de rebulet de blé, de son de blé, de blé issu de malterie, de drêches de blé, de gluten feed de blé, de babassu expeller, de camelina expeller, de cosses de cacao, de tourteau de cacao, de graines de coprah, de coprah expeller, de graines de cotton, de graines de cotton expeller, de tourteau de cotton, d'arachide, de tourteau d'arachide, d'arachide expeller, de graines de kapok, de kapok expeller, de graines de lin, de lin expeller, de son de moutarde, de graines de Niger, de graines de Niger expeller, de pulpes d'olive, de tourteau de palmiste, de graines de colza, de colza expeller, de tourteau de colza, de graines de carthame, de tourteau de carthame, de cosses de carthame, de graines de sésame, de sésame expeller, de cosses de sésame, de graines de soja, de soja expeller, de tourteau de soja, de cosses de soja, de graines de tournesol, de tournesol expeller, de tourteau de tournesol, de cosses de tournesol, de graines de chanvre, de chanvre expeller, d'huile de chanvre, de caroube, de gousses de caroube, de féverole, de cosses de féverole, de tourteau de guar, de lentille, de cosses de lentille, de lupin, de cosses de lupin, de pulpe de lupin, de rebulet de lupin, de pois, de son de pois, de cosses de pois, de rebulet de pois, de pulpe de pois, de pulpes de betterave, de carottes, de pelures de carotte, de racines de carotte, de pulpes de carotte, de racines de chicorée, de mélasse de chicorée, de pulpes de chicorée, de pulpes d'oignons, d'oignons frits, de pelures de pomme de terre, de pulpes de pomme de terre, de flocons de pomme de terre, de boutures de pomme de terre, de glands, de coque de gland, d'amandes, de coques d'amande, de pulpes de pommes, de mélasses de pomme, de sarrasin, de son et balles de sarrasin, de rebulet de sarrasin, de châtaignes, de pulpes d'agrumes, de coques de café, de dattes, de pulpes de fruits, de cresson, de pépins de raisins, de tourteaux de pépins de raisins, de pulpes de raisins, de pulpes de tomates, de luzerne, de millet, de manioc, de patate douce, de panais, de topinambour, d'igname, de taro, de citrouille, de tapioca, de noix de cajou, de graines de lotus, de pistache, de niébé, de banane, de banane plantain et leurs mélanges.

Avantageusement, selon l'invention, l'amidon résistant fermentescible dans le gros intestin, est présent dans une matière première ou dans un extrait d'une matière première étant choisie dans le groupe constitué de l'orge, de rebulet d'orge, de son d'orge, de maïs, d'épis de maïs, de son de maïs, d'avoine, de rebulet d'avoine, de son d'avoine, de riz, de rebulet de riz, de son de riz, de seigle, de rebulet de seigle, de son de seigle, de sorgho, d'épeautre, de rebulet d'épeautre, de son d'épeautre, de triticale, de son de triticale, de blé, de rebulet de blé, de son de blé, de féverole, de lentille, de pois, de rebulet de pois, de noix de cajou, de châtaigne, de graines de lotus, de pistache de niébé, de pommes de terre, de sarrasin, de rebulet de sarrasin, de banane, de banane plantain, de haricot, de millet, de manioc, de tapioca, de patate douce, de panais, de topinambour, d'igname, de carotte, de taro, de citrouille et leurs mélanges.

Préférentiellement, l'aliment selon l'invention présente un ratio en poids tryptophane iléal apparent / lysine iléale apparente inférieur ou égal à ou égal à 0,21, de préférence inférieur ou égal à 0,17, préférentiellement inférieur ou égal à 0,15.

L'aliment selon l'invention comprend en outre des graines de lin, en particulier des graines de lin extrudées, de préférence à raison d'au moins 3% en poids par rapport au poids total de l'aliment, de préférence à raison d'au moins 5% en poids par rapport au poids total de l'aliment, préférentiellement à raison d'au moins 7% en poids par rapport au poids total de l'aliment. Un tel apport dans l'aliment de graines de lins extrudées est favorable puisque ces graines présentent des propriétés antioxydantes, hépatoprotectrices et contribuent à un apport en fibres.

Avantageusement, l'aliment selon l'invention comprend une quantité en poids de protéine brute inférieure ou égale à 145 g/kg d'aliment, de préférence inférieure ou égale à 135 g/kg d'aliment, préférentiellement inférieure ou égale à 125 g/kg d'aliment.

De préférence, l'aliment selon l'invention comprend en outre au moins un probiotique choisi dans le groupe constitué de Bacillus licheniformis, Bacillus subtilis, Clostridium butyricum, Enterococcus faecium, Enterococcus faecium, Pediococcus acidilactici, Saccharomyces cerevisiae et leurs mélanges et/ou au moins un prébiotique choisi dans le groupe constitué des monosaccharides tels que le xylose, le mannose, l'arabinose, le rhamnose et le fucose, des disaccharides tels que le lactose, des polyols tels que l'isomalt, le maltitol, le sorbitol, le xylitol, le polydextrose, le lactosucrose et l'érythritol, le lactulose, des oligosaccharides tels que les fructo-oligosaccharides, l'oligofructose, les cyclodextrines, les malto-oligosaccharides, les galacto-oligosaccharides, les isomalto-oligosaccharides, les gluco-oligosaccharides, les xylo-oligosaccharides, les mannan-oligosaccharides, les N-acetylchito-oligosaccharides, les oligosaccharides pectiques, l'acide glucuronique, des polysaccharides amylacés tels que l'amylose, des polysaccharides non-amylacés ou fibres alimentaires tels que la cellulose, les polymères de glucose, les substances pectiques, les β-glucanes et les hémicelluloses comme les hétéropolymères d'arabinose ou de xylose, des gommes et des fructanes comme l'inuline et leurs mélanges.

Préférentiellement, l'aliment selon l'invention comprend en outre au moins un agent hépatoprotecteur choisi dans le groupe constitué du chlorure de choline, de la bétaïne, des donneurs de groupements méthyl comme par exemple la diméthylglycine, la glycine, l'arginine, la cystéine, la carnitine, le gluthation, l'asparagine, la vitamine C, la vitamine E, de végétaux ou d'extraits de végétaux tels que Aloe barabadensis, Artemisia capillaris, Cardiospermum halicacabum, Cineraria abyssinica, Cochlospermum vitifolium, Cochlospermum angolensis, Cynara scolymus, Ficus ingens, Gentiana olivieri, Laggera pterodonta, Nelumbo nucifera, Phyllanthus amarus, Schisandra chinensis, Silybum marianum, Bauhinia variegata, Hippophae rhamnoides et leurs mélanges.

De préférence, dans le cadre de l'invention, une fraction dudit aliment définie par au moins un agent hépatoprotecteur représente une quantité en poids supérieure à 0,2 g/kg d'aliment, avantageusement supérieure à 0,5 g/kg d'aliment, de préférence supérieure à 1 g/kg d'aliment, préférentiellement supérieure à 1,5 g/kg d'aliment, plus préférentiellement supérieure à 2 g/kg d'aliment.

De préférence, une fraction dudit aliment selon l'invention, définie par ledit au moins un hydrate de carbone non amylacé fermentescible dans le gros intestin représente une quantité en poids supérieure à 140 g/kg d'aliment, avantageusement supérieure à 150 g/kg d'aliment, de préférence supérieure à 160 g/kg d'aliment, préférentiellement supérieure à 170 g/kg d'aliment, plus préférentiellement supérieure à 180 g/kg d'aliment, plus préférentiellement encore supérieure à 190 g/kg d'aliment.

De préférence, une fraction dudit aliment selon l'invention, définie par ledit amidon résistant fermentescible dans le gros intestin représente une quantité en poids supérieure à 10 g/kg d'aliment, avantageusement supérieure à 20 g/kg d'aliment, de préférence supérieure à 30 g/kg d'aliment, préférentiellement supérieure à 40 g/kg d'aliment, préférentiellement supérieure à 45 g/kg d'aliment.

Avantageusement, l'aliment selon l'invention comprend en outre au moins une source d'apport en acide gras à courte chaîne comme par exemple l'acide butyrique, l'acide acétique, l'acide propionique, l'acide lactique et leurs mélanges.

De façon préférée, l'aliment selon l'invention comprend en outre au moins un composé actif d'origine végétale comme par exemple des plantes ou des extraits de plantes tels que des flavonoïdes comme le chrisantellum, le kudzu, la curcumine, le thé vert, le gingembre, le pissenlit, l'ortie, les plantes dont est issu l'acide ellagique et leurs mélanges.

Préférentiellement, l'aliment selon l'invention se présente sous le forme de granulés, sous la forme de poudre ou encore sous la forme de farine.

D'autres formes de réalisation d'un aliment suivant l'invention sont indiquées dans les revendications annexées.

L'invention a aussi pour objet un procédé de fabrication d'un aliment complet tel que défini précédemment comprenant l'étape d'ajout à une ration alimentaire de base d'un aliment concentré comprenant au moins un hydrate de carbone non amylacé et de l'amidon résistant fermentescibles dans le gros intestin d'un animal, en particulier dans le gros intestin d'un animal de la famille des suidés.

D'autres formes de réalisation d'un aliment complémentaire concentré ou non suivant l'invention sont indiquées dans les revendications annexées.

L'invention a aussi pour objet un procédé non thérapeutique pour favoriser la flore saccharolitique dans le gros intestin d'un animal, en particulier dans le gros intestin d'un animal de la famille des suidés, le procédé comprenant au moins une étape d'alimentation dudit animal avec un aliment selon l'invention durant une phase de croissance et/ou une phase de finition lors de l'engraissement.

D'autres formes de réalisation du procédé pour favoriser la flore saccharolitique dans le gros intestin d'un animal suivant l'invention sont indiquées dans les revendications annexées.

L'invention a également pour objet un procédé non thérapeutique pour réduire la problématique d'odeur liée à la présence de scatol et/ou d'androsténone et/ou d'indol, en particulier la problématique d'odeur de verrat au sein d'un élevage d'au moins un animal, le procédé comprenant au moins une étape d'alimentation dudit animal avec un aliment selon l'invention durant une phase de croissance et/ou une phase de finition lors de l'engraissement.

D'autres formes de réalisation du procédé pour réduire la problématique d'odeur liée à la présence de scatol et/ou d'androsténone et/ou d'indol, en particulier la problématique d'odeur de verrat au sein d'un élevage suivant l'invention sont indiquées dans les revendications annexées.

L'invention a aussi pour objet une utilisation non thérapeutique d'un aliment selon l'invention pour favoriser la flore saccharolitique dans le gros intestin d'un animal, en particulier dans le gros intestin d'un animal de la famille des suidés.

L'invention a également pour objet une utilisation non thérapeutique d'un aliment selon l'invention pour réduire la problématique d'odeur liée à la présence de scatol et/ou d'androsténone et/ou d'indol, en particulier la problématique d'odeur de verrat au sein d'un élevage d'au moins un animal.

D'autres formes d'utilisations d'un aliment suivant l'invention sont indiquées dans les revendications annexées.

La présente invention porte également sur un procédé non thérapeutique d'administration d'un aliment suivant l'invention, ledit aliment étant administré en tant qu'aliment unique au moins 1 semaine avant l'abattage, de préférence au moins 2 semaines avant l'abattage, de préférence au moins 3 semaines avant l'abattage, préférentiellement au moins 4 semaines avant l'abattage, à raison d'au moins 1,5 kg/porc/jour, de préférence à raison d'au moins 2 kg/porc/jour, de préférence à raison d'au moins 3 kg/porc/jour.

D'autres formes d'administration d'un aliment suivant l'invention sont indiquées dans les revendications annexées.

D'autres caractéristiques, détails et avantages de l'invention ressortiront des exemples donnés ci-après, à titre non limitatif et en faisant référence aux figures annexés.

Chaque variante préférentielle d'un quelconque mode de réalisation de l'invention peut s'appliquer à n'importe quel autre quelconque mode de réalisation de l'invention.

La figure 1 est un graphique qui compare les concentrations en scatol (ng/g) mesurées dans les échantillons du groupe contrôle (alimentation classique) et du groupe test (alimentation selon l'invention).

La figure 2 est un graphique qui compare les concentrations en indol (ng/g) mesurées dans les échantillons du groupe contrôle (alimentation classique) et du groupe test (alimentation selon l'invention).

La figure 3 est un graphique qui compare les concentrations en androsténone (ng/g) mesurées dans les échantillons du groupe contrôle (alimentation classique) et du groupe test (alimentation selon l'invention).

La figure 4 est un graphique qui montre la répartition des concentrations en scatol (ng/g) et en androsténone (ng/g) des échantillons du groupe contrôle.

La figure 5 est un graphique qui montre la répartition des concentrations en scatol (ng/g) et en androsténone (ng/g) des échantillons du groupe test.

## Exemple 1

Des mesures analytiques de détermination de la présence (concentrations) de scatol, d'androsténone et d'indol dans des viandes obtenues suite à l'abattage de porcs mâles entiers préalablement nourris ou non avec un aliment selon l'invention en phase d'engraissement ont été réalisées. En parallèle des mesures sensorielles ont été menées afin de déterminer si une alimentation à base d'un aliment rend indétectable l'odeur de verrat par l'odorat humain pour des viandes obtenues suite à l'abattage de porcs mâles entiers préalablement nourris ou non avec un aliment selon l'invention en phase d'engraissement.

Pour ce faire, un groupe contrôle de 100 individus et un groupe test de 97 individus ont été constitués. L'ensemble des individus étudiés est de même race et de même descendance génétique, de même âge, provenant d'un même élevage, les individus étant nés à 2-3 jours d'intervalle maximum dans une même ferme agricole.

Le groupe contrôle a été alimenté de façon classique, c'est-à-dire d'abord avec un aliment « porcelet premier âge » (aliment Dumoulin 1060), puis avec un aliment « porcelet deuxième âge » (aliment Dumoulin 1080), puis avec un aliment de pré-engraissement (aliment Dumoulin 1110) et finalement avec un aliment de finition (aliment Dumoulin 1300). Le groupe contrôle a également été nourri avec cet aliment de finition pendant les 3 semaines précédant l'abattage. Les quantités apportées aux porcs ont été établies selon les recommandations prescrites par le fabriquant (Dumoulin) pour chacun de ces aliments.

Le groupe test à quant à lui été alimenté de la façon suivante :

- alimentation classique telle que celle mentionnée ci-dessus jusqu'à 3 semaines avant l'abattage;
- à partir de 3 semaines avant l'abattage, le groupe test a reçu une alimentation selon l'invention composée de (en %) 29,7 blé, 15,0 orge, 10,0 maïs, 7,1 rebulet de blé, 7,4 tourteau d'extraction de soja, 5,5 amidon de riz, 7,0 chicorée, 5,0 pellicules de soja, 1,5 pulpes de betteraves, 6,0 Nutex 68 (graines de lin extrudées), 2,0 coques de cacao, 1,16 craie, 1,0 mélasse, 0,56 L-lysine50%, 0,46 sel, 0,2 prémélange minéral et vitaminé porcs, 0,2 chlorure de choline, 0,13 thréonine, 0,08 saindoux, 0,08 DL-Méthionine, 0,04 B. subtilis + B licheniformis, 0,2 butyrate, 0,02 plantes et extraits de plantes. L'aliment ainsi composé contient 2130 Kcal NE porc, 135,0 g/kg de protéine brute, 39,3 g/kg de matières grasses totales, 59,0 g/kg de cellulose brute, 216,5 g/kg de NSP, 158,7 g/kg de dNSP et 45,0 g/kg d'amidon résistant. Cet aliment selon l'invention présente une valeur ADF de 76,6 g/kg.

## 1. Evaluation sensorielle

### 1.1. A l'abattage

Immédiatement suite à l'abattage (abattoir Lovenfosse, Belgique), un expert a testé 196 carcasses par la technique reconnue du fer chaud et a identifié celles ne présentant pas une odeur de verrat par le score 0 et celle présentant une odeur de verrat par le score 1.

### 1.2. A l'abattage et le lendemain

Le jour de l'abattage et le lendemain, quatre experts (ILVO - Instituut voor Landbouw- en Visserijonderzoek, Belgique) ont poursuivi ce test sensoriel sur des échantillons de tissus gras provenant de ces 196 carcasses par la même technique reconnue du fer chaud dans un environnement neutre (c'est-à-dire exempt d'odeur d'abattage) et sans contrainte de temps. Les échantillons ont été notés sur une échelle de 0 à 4 (scores), depuis une absence d'odeur de verrat (score de 0) jusqu'à une très forte odeur de verrat (score de 4). Pour un échantillon donné, la médiane a été établie comme score final : si la médiane était supérieure ou égale à 1, l'échantillon a été considéré comme positif pour l'odeur de verrat.

## 2. Evaluation par analyse chimique

Pour l'analyse chimique de l'odeur de verrat, une sélection de 100 échantillons de graisse sous-cutanée, prélevés au niveau du cou de l'animal, a été effectuée pour considérer les carcasses les plus lourdes de telle façon à former un groupe contrôle de 50 échantillons et un groupe test de 50 échantillons. Ces échantillons ont été nettoyés (par ILVO) puis envoyés à ELFI Analytik GbR (Neufahrn, Allemagne) pour l'analyse chimique du scatol, de l'indol et de l'androsténone (analyse GC-MS selon la méthodologie SIDA-HS-SPME-GC/MS, voir Anal. Chem., 2011, 83, 6785-6791).
Pour le scatol et l'indol, la valeur critique a été fixée de 200 à 250 ppb. Pour l'androsténone, la valeur critique a été fixée de 2000 à 3000 ppb. Par « valeur critique » il est entendu la valeur pour laquelle la concentration en composés est véritablement problématique et à éviter, soit la valeur à ne pas dépasser idéalement.

## 3. Analyse statistique

L'influence du traitement alimentaire sur l'odeur de verrat a été évaluée par régression logistique sur les transformées logarithmiques des concentrations en scatol, en indole et en androsténone dans le gras (dans les matières grasses). L'effet du traitement alimentaire sur la prévalence de l'odeur de verrat a été évaluée par régression logistique.
La prévalence de l'odeur de verrat et du scatol, selon les scores sensoriels a été évaluée par l'intermédiaire du test statistique de Fisher.

## 4. Résultats

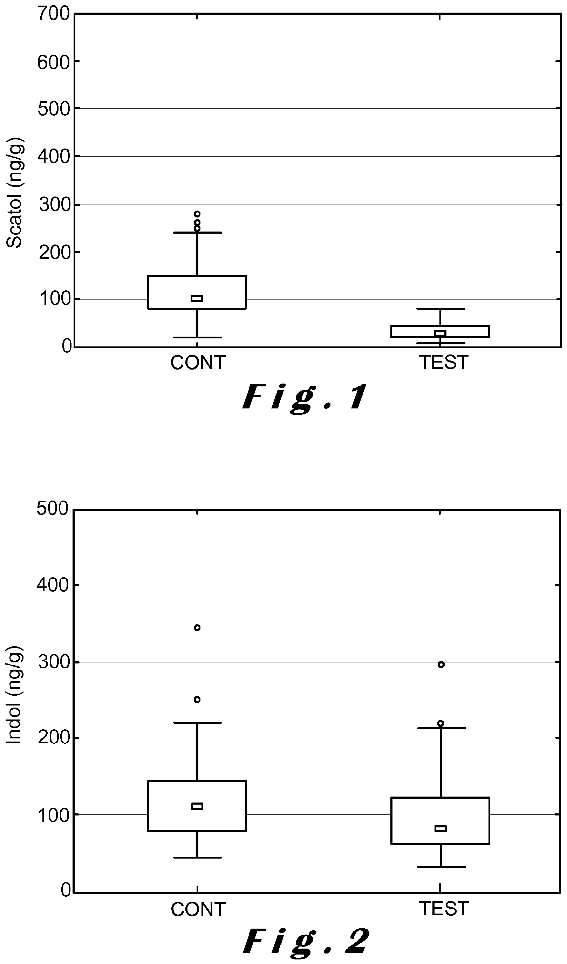

Le tableau 1 ci-dessous et les figures 1 à 5 reprennent les résultats obtenus au travers des analyses décrites ci-avant (chimique et sensorielle).

Tableau 1

| | Contrôle *n=100* | Test *n=97* | P-valeur |
|---|---|---|---|
| **Etude sensorielle à l'abattage** | | | |
| Score | 0,070 ± 0,256 | 0,041 ± 0,200 | 0,385 |
| % odeur de verrat | 7,00% | 4,10% | |
| **Etude sensorielle les 2 jours suivants l'abattage (panel d'experts)** | *n=110* | *n=97* | |
| Score | 0,082 ± 0,31 | 0,000 ± 0,00 | 0,042 |
| % odeur de verrat | 8,00% | 0,00% | 0,008 |

(suite)

| Analyse chimique | n=50 | n=50 | |
|---|---|---|---|
| Indol (valeur médiane) | 115 ± 56 | 103 ± 74 | 0,088 |
| % > 200 ppb | 6,00% | 8,00% | 0,696 |
| % > 250 ppb | 4,00% | 4,00% | 1 |
| | | | |
| Scatol (valeur médiane) | 137 ± 118 | 33 ± 19 | <0,001 |
| % > 200 ppb | 16,00% | 0,00% | 0,006 |
| % > 250 ppb | 12,00% | 0,00% | 0,027 |
| | | | |
| Androsténone (valeur médiane) | 1450 ± 1160 | 1153 ± 735 | 0,244 |
| % > 2000 ppb | 22,00% | 16,00% | 0,446 |
| % > 3000 ppb | 16,00% | 4,00% | 0,063 |

Comme on peut le constater, l'étude sensorielle réalisée le jour de l'abattage et le lendemain et l'analyse chimique font ressortir une réduction très nette et significative de l'odeur de verrat pour les viandes obtenues suite à l'abattage de porcs mâles entiers préalablement nourris avec un aliment selon l'invention en phase d'engraissement, ceci en comparaison avec des viandes obtenues au départ de porcs mâles entiers préalablement nourris avec un aliment classique.

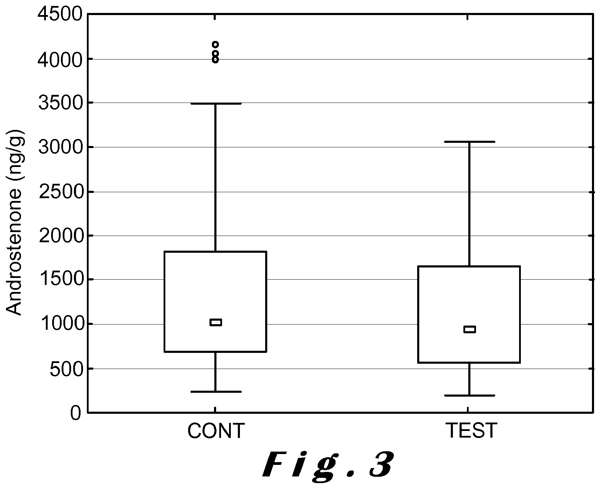

En effet, en ce qui concerne l'étude sensorielle, 8% des viandes analysées pour le groupe contrôle (alimentation classique) présentait une odeur de verrat alors que 0% des viandes analysées pour le groupe test (alimentation selon l'invention) a été identifié comme présentant une odeur de verrat. Par ailleurs, les analyses chimiques ont permis de confirmer ces résultats, particulièrement en ce qui concerne le scatol puisqu'une réduction significative de la concentration en scatol a été établie entre les échantillons du groupe contrôle (137 ± 118 ppb) et du groupe test (33 ± 19 ppb) (figure 1). On peut également constater, pour les concentrations en indol mesurées, une tendance à une réduction de cette concentration dans le groupe test (103 ± 74 ppb) par rapport au groupe contrôle (115 ± 56 ppb) (figure 2). Par contre, malgré une différence numérique importante, aucune différence significative n'a pu être mise en évidence pour les concentrations entre les échantillons du groupe contrôle (1450 ± 1160 ppb) et du groupe test (1153 ± 735 ppb) pour l'androsténone (figure 3).

Sur chacune des figures 1 à 3, les valeurs médianes des concentrations mesurées sont représentées par des carrés et les valeurs aberrantes, c'est-à-dire les valeurs statistiquement éloignées (« distantes ») des autres observations effectuées sont représentées par des ronds. Comme on peut le constater, pour les concentrations en scatol et en androsténone, seul le groupe contrôle présente des valeurs aberrantes alors que le groupe test n'en présente aucune. Il ressort donc de ceci que, pour le scatol et l'androsténone, des valeurs aberrantes ne sont observées que chez les porcs ayant reçu un aliment classique et non pas un aliment selon l'invention.

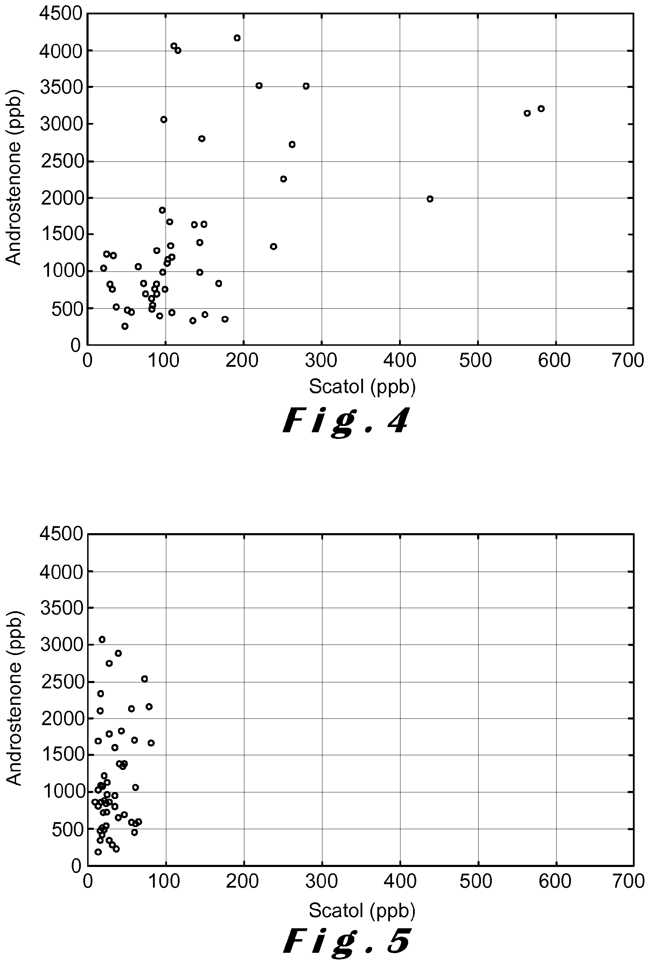

Les figures 4 et 5 font ressortir que les échantillons en provenance des porcs du groupe test présentent des concentrations en scatol se situant toutes en-dessous de la valeur critique pour le scatol (200 à 250 ppb), et même largement en-dessous de cette valeur, car tous les échantillons comportent moins de 100 ppb (= ng/g) de scatol.

Par contre, pour le groupe contrôle, les concentrations en scatol de nombreux échantillons se trouvent à la fois au-dessus de la valeur de 100 ppb et de la valeur critique de 200 à 250 ppb.

Pour l'androsténone, on constate des différences importantes : ainsi, pour le groupe test, 16% des échantillons présentent des teneurs en androsténone supérieures à la valeur critique de 3000 ppb et même certaines valeurs supérieures à 3500 ppb voire même supérieures à 4000 ppb. Par contre, pour le groupe test, seulement 4% des échantillons dépassent la valeur critique de 3000 ppb et aucun échantillon ne dépasse la valeur de 3500 ppb pour les concentrations en androsténone. Notons que, suivant certains auteurs, l'odeur de verrat d'une viande serait plus forte et plus gênante si à la fois les valeurs critiques pour le scatol et pour l'androsténone sont dépassées. La figure 4 illustre parfaitement cette situation pour le groupe contrôle, alors que ce n'est pas le cas pour le groupe test (figure 5).

Il est aussi intéressant de constater que les analyses chimiques de scatol, d'androsténone et d'indol sont bien corrélées à l'étude sensorielle à l'abattage et le lendemain. En effet, les coefficients de corrélation (r) sont respectivement de 0,61, 0,38 et 0,38 pour les trois substances mentionnées ci-dessus.

## Exemple 2

Des mesures analytiques de détermination de la présence (concentrations) de scatol, dans des viandes obtenues suite à l'abattage de porcs mâles entiers préalablement nourris ou non avec un aliment selon l'invention ou avec un aliment selon l'invention ne contenant pas « d'amidon résistant fermentescible dans le gros intestin » ou avec un aliment selon l'invention ne contenant pas de graines de lin, en phase d'engraissement ont été réalisées.

Pour ce faire, un groupe contrôle 2 de 24 individus, un groupe test 2A de 26 individus, un groupe test 2B de 26 individus et un groupe test 2C ont été constitués. L'ensemble des individus étudiés des groupes contrôle 2, test 2A, test 2B et test 2C est de même race et de même descendance génétique, de même âge, provenant d'un même élevage, les individus étant nés à 2-3 jours d'intervalle maximum dans une même ferme agricole.

Le groupe contrôle 2 a été alimenté de la même façon que le groupe contrôle de l'exemple 1.

Le groupe test 2A a été alimenté de la même façon que le groupe test de l'exemple 1.

Le groupe test 2B à quant a lui été alimenté de la façon suivante :

- alimentation classique telle que celle mentionnée pour le groupe contrôle de l'exemple 1 jusqu'à 3 semaines avant l'abattage;
- à partir de 3 semaines avant l'abattage, le groupe test 2B a reçu une alimentation, telle que celle reçue par le groupe test 2A (à partir de 3 semaines avant l'abattage) ne contenant pas d' « amidon résistant fermentescible dans le gros intestin ». En d'autres termes, à partir de 3 semaines avant l'abattage, l'aliment reçu par le groupe test 2B diffère de l'aliment selon l'invention reçu par le groupe test 2A, en ce qu'il ne contient pas d' « amidon résistant fermentescible dans le gros intestin ». C'est-à-dire que l'aliment ainsi composé contient 2130 Kcal NE porc, 135,0 g/kg de protéine brute, 39,3 g/kg de matières grasses totales, 59,0 g/kg de cellulose brute, 216,5 g/kg de NSP, 158,7 g/kg de dNSP. Cet aliment selon l'invention présente une valeur ADF de 76,6 g/kg.

Le groupe test 2C à quant à lui été alimenté de la façon suivante :

- alimentation classique telle que celle mentionnée pour le groupe contrôle de l'exemple 1 jusqu'à 3 semaines avant l'abattage;
- à partir de 3 semaines avant l'abattage, le groupe test 2C a reçu une alimentation, telle que celle reçue par le groupe test 2A (à partir de 3 semaines avant l'abattage) ne contenant pas de graines de lin. En d'autres termes, à partir de 3 semaines avant l'abattage, l'aliment reçu par le groupe test 2C diffère de l'aliment selon l'invention reçu par le groupe test 2A, en ce qu'il ne contient pas de graines de lin.

## 1. Evaluation par analyse chimique

Pour l'analyse chimique de l'odeur de verrat, une sélection de 99 échantillons de graisse sous-cutanée, prélevés au niveau du cou de l'animal, a été effectuée pour considérer les carcasses les plus lourdes de telle façon à former un groupe contrôle 2 de 24 échantillons, un groupe test 2A de 26 échantillons, un groupe test 2B de 26 échantillons et un groupe test 2C de 23 échantillons. Ces échantillons ont été nettoyés (par ILVO) puis envoyés à ELFI Analytik GbR (Neufahrn, Allemagne) pour l'analyse chimique du scatol (analyse GC-MS selon la méthodologie SIDA-HS-SPME-GC/MS, voir Anal. Chem., 2011, 83, 6785-6791).

Pour le scatol, la valeur critique a été fixée de 200 à 250 ppb. Par « valeur critique » il est entendu la valeur pour laquelle la concentration en composés est véritablement problématique et à éviter, soit la valeur à ne pas dépasser idéalement.

## 2. Analyse statistique

L'influence du traitement alimentaire sur l'odeur de verrat a été évaluée par régression logistique sur les transformées logarithmiques des concentrations en scatol.

## 3. Résultats

Le tableau 2 ci-dessous reprend les résultats obtenus au travers des analyses chimiques décrites ci-avant.

Tableau 2

| Analyse chimique | Test 2A *n=26* | Test 2B *n=26* | Test 2C n=23 | Contrôle 2 n=24 |
|---|---|---|---|---|
| Scatol (valeur médiane en ppb) | 75 | 187 | 117 | 398 |

Comme on peut le constater, les analyses chimiques ont permis de mettre en évidence une réduction significative de la concentration en scatol entre les échantillons du groupe contrôle 2 (398 ppb) et du groupe test 2A (75 ppb). De plus, comme montré au tableau 2, le groupe test 2B ayant été nourri par un aliment selon l'invention ne contenant pas d' « amidon résistant fermentescible dans le gros intestin », présente une valeur médiane de concentration en scatol de 187 ppb, ce qui est significativement plus élevé que la concentration en scatol obtenue pour le groupe test 2A (75 ppb) mais ce qui est également significativement moins élevé que la concentration en scatol obtenue pour le groupe contrôle 2. Concernant le groupe test 2C qui a été nourri par un aliment suivant l'invention ne contenant pas de graines de lin, la concentration en scatol est plus élevée (117 ppb) que la concentration en scatol obtenue dans le cas du groupe test 2A mais elle est moins élevée que la concentration en scatol obtenue dans le cas du groupe test 2B et encore moins élevée que la concentration en scatol obtenue dans le cas du groupe contrôle 2.

De cet exemple, il est donc possible de tirer plusieurs enseignements. Le premier enseignement est que l'alimentation reçue par le groupe test 2B permet de réduire la concentration en scatol. C'est-à-dire que l'aliment suivant l'invention comprenant au moins un hydrate de carbone non amylacé fermentescible dans le gros intestin mais ne comprenant pas d'amidon résistant fermentescible dans le gros intestin, permet de réduire la concentration en scatol. Le deuxième enseignement est que l'alimentation reçue par le groupe test 2A permet de réduire encore d'avantage la concentration en scatol. C'est-à-dire que l'aliment suivant l'invention comprenant entre autres au moins un hydrate de carbone non amylacé et de l'amidon résistant fermentescibles dans le gros intestin, permet de réduire encore d'avantage la concentration en scatol.

Un autre enseignement que l'aliment reçu par le groupe test 2C, permet également de réduire la concentration en scatol. C'est-à-dire un aliment selon l'invention comprenant au moins un hydrate de carbone non amylacé et de l'amidon résistant fermentescibles dans le gros intestin mais ne comprenant pas de graines de lin permet de réduire la concentration en scatol. Il a donc été mis en évidence que l'alimentation reçue par les groupes test 2A, 2B et 2C permettent de réduire la concentration en scatol. Cependant, l'alimentation reçue par le groupe test 2A permet de réduire la concentration en scatol de manière plus importante que l'alimentation reçue par le groupe 2B. De plus, cette dernière permet de réduire la concentration en scatol de manière plus importante que l'alimentation reçue par le groupe 2C.

Comme l'aliment reçu par le groupe test 2A comprend au moins un hydrate de carbone non amylacé et de l'amidon résistant fermentescibles dans le gros intestin ainsi que des graines de lin, on peut en conclure que l'ajout de graines de lin à l'aliment reçu par le groupe test 2C permet de réduire la concentration en scatol de 35,8%. De plus, l'ajout d'amidon résistant à l'aliment reçu par le groupe test 2B permet de réduire la concentration en scatol de 59,9%.

**Exemple 3**

Des mesures analytiques de détermination de la présence (concentrations) de scatol, dans des viandes obtenues suite à l'abattage de porcs mâles entiers préalablement nourris avec un aliment selon l'invention ou non ou avec un aliment selon l'invention ne contenant pas « d'agent hépatoprotecteur », en phase d'engraissement ont été réalisées.

Pour ce faire, un groupe test 3A de 51 individus, un groupe test 3B de 43 individus et un groupe contrôle 3 de 50 individus ont été constitués. L'ensemble des individus étudiés des groupes test 3A, test 3B et contrôle 3 est de même race et de même descendance génétique, de même âge, provenant d'un même élevage, les individus étant nés à 2-3 jours d'intervalle maximum dans une même ferme agricole.

Le groupe contrôle 3 a été alimenté de façon classique, c'est-à-dire d'abord avec un aliment « porcelet premier âge » (aliment Dumoulin 1060), puis avec un aliment « porcelet deuxième âge » (aliment Dumoulin 1080), puis avec un aliment de pré-engraissement (aliment Dumoulin 1110) et finalement avec un aliment de finition (aliment Dumoulin 1300) mélangé à un agent hépatoprotecteur. Le groupe contrôle 3 a également été nourri avec cet aliment de finition mélangé à un agent hépatoprotecteur pendant les 3 semaines précédant l'abattage. Les quantités apportées aux porcs ont été établies selon les recommandations prescrites par le fabriquant (Dumoulin) pour chacun de ces aliments.

Le groupe test 3A a été alimenté de la même façon que le groupe test de l'exemple 1.

Le groupe test 3B à quant à lui été alimenté de la façon suivante :

- alimentation classique telle que celle mentionnée pour le groupe contrôle de l'exemple 1 jusqu'à 3 semaines avant l'abattage;
- à partir de 3 semaines avant l'abattage, le groupe test 3B a reçu une alimentation, telle que celle reçue par le groupe test 3A (à partir de 3 semaines avant l'abattage) ne contenant pas d'agent hépatoprotecteur. En d'autres termes, à partir de 3 semaines avant l'abattage, l'aliment reçu par le groupe test 3B diffère de l'aliment selon l'invention reçu par le groupe test 3A, en ce qu'il ne contient pas d'agent hépatoprotecteur.

**1. Evaluation par analyse chimique**

Pour l'analyse chimique de l'odeur de verrat, une sélection de 144 échantillons de graisse sous-cutanée, prélevés au niveau du cou de l'animal, a été effectuée pour considérer les carcasses les plus lourdes de telle façon à former un groupe test 3A de 51 échantillons, un groupe test 3B de 43 échantillons et un groupe contrôle 3. Ces échantillons ont été nettoyés (par ILVO) puis envoyés à ELFI Analytik GbR (Neufahrn, Allemagne) pour l'analyse chimique du scatol (analyse GC-MS selon la méthodologie SIDA-HS-SPME-GC/MS, voir Anal. Chem., 2011, 83, 6785-6791).

Pour le scatol, la valeur critique a été fixée de 200 à 250 ppb. Par « valeur critique » il est entendu la valeur pour laquelle la concentration en composés est véritablement problématique et à éviter, soit la valeur à ne pas dépasser idéalement.

## 2. Analyse statistique

L'influence du traitement alimentaire sur l'odeur de verrat a été évaluée par régression logistique sur les transformées logarithmiques des concentrations en scatol.

## 3. Résultats

Le tableau 3 ci-dessous reprend les résultats obtenus au travers des analyses chimiques décrites ci-avant.

Tableau 3

| Analyse chimique | Test 3A *n=51* | Test 3B n=43 | Contrôle 3 n=50 |
|---|---|---|---|
| Scatol (valeur médiane en ppb) | 24 | 39 | 71 |

Comme on peut le constater, les analyses chimiques ont permis de mettre en évidence une augmentation de la concentration en scatol entre les échantillons du groupe test 3A (24 ppb) et du groupe test 3B (39 ppb). Cependant, on peut voir que la concentration en scatole est plus faible pour les échantillons des groupes test 3A et 3B que pour les échantillons du groupe contrôle 3 (71 ppb). C'est-à-dire que l'aliment suivant l'invention comprenant entre autres au moins un hydrate de carbone non amylacé et de l'amidon résistant fermentescibles dans le gros intestin mais ne comprenant pas d'agent hépatoprotecteur permet de réduire la concentration en scatol. Il a donc été mis en évidence que l'alimentation reçue par les groupes test 3A et 3B permettent de réduire la concentration en scatol. Cependant, l'alimentation reçue par le groupe test 3A permet de réduire la concentration en scatol de manière encore plus importante que l'alimentation reçue par le groupe test 3B.

Comme l'aliment reçu par le groupe 3A comprend la composition de l'aliment reçu par le groupe 3B avec un agent hépatoprotecteur en plus, on peut en conclure que l'ajout d'agent hépatoprotecteur à l'aliment reçu par le groupe test 3B, permet de réduire la concentration en scatol de 38,4%.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Aliment complet pour animal, en particulier aliment complet pour animal de la famille des suidés, pour réduire la problématique d'odeur et/ou de goût liée à la présence de scatol et/ou d'androsténone et/ou d'indol, en particulier pour réduire la problématique d'odeur de verrat, ledit aliment étant **caractérisé en ce qu'**il comprend au moins un hydrate de carbone non amylacé et de l'amidon résistant fermentescibles dans le gros intestin, de telle sorte qu'une fraction dudit aliment définie par ledit au moins un hydrate de carbone non amylacé et ledit amidon résistant fermentescibles dans le gros intestin représente une quantité en poids supérieure à 140 g/kg d'aliment, avantageusement supérieure à 150 g/kg d'aliment, de préférence supérieure à 160 g/kg d'aliment, préférentiellement supérieure à 170 g/kg d'aliment, plus préférentiellement supérieure à 180 g/kg d'aliment, plus préférentiellement encore supérieure à 190 g/kg d'aliment et **caractérisé en ce qu'**il comprend en outre des graines de lin, en particulier des graines de lin extrudées.

2. Aliment selon la revendication 1 comprenant au moins 3% en poids de graines de lin ou de graines de lin extrudées par rapport au poids total de l'aliment, de préférence au moins 5% en poids par rapport au poids total de l'aliment, préférentiellement au moins 7% en poids par rapport au poids total de l'aliment.

3. Aliment selon la revendication 1 ou 2, **caractérisé en ce que** ledit au moins un hydrate de carbone fermentescible dans le gros intestin, est choisi dans le groupe constitué des monosaccharides tels que le xylose, le mannose, l'arabinose, le rhamnose et le fucose, des disaccharides tels que le lactose, des polyols tels que l'isomalt, le maltitol, le sorbitol, le xylitol et l'érythritol, des oligosaccharides tels que les fructo-oligosaccharides, les malto-oligosaccharides, et les galacto-oligosaccharides, des polysaccharides non-amylacés ou fibres alimentaires tels que la cellulose, les polymères de glucose, les substances pectiques, les $\beta$-glucanes et les hémicelluloses comme les hétéropolymères d'arabinose ou de xylose, des gommes et des fructanes comme l'inuline et leurs mélanges.

4. Aliment selon une quelconque des revendications précédentes, **caractérisé en ce que** ledit au moins un hydrate de carbone fermentescible dans le gros intestin est présent dans une matière première ou dans un extrait d'une matière première étant choisie dans le groupe constitué de l'orge, du rebulet d'orge, d'orge issu de malterie, de radicelles d'orge, de drêches d'orge, de son d'orge, du maïs, de drêches de maïs, de rafles de maïs, de rebulet de maïs, de son de maïs, de gluten feed de maïs, d'épis de maïs, de l'avoine, de rebulet d'avoine, de son d'avoine, de cosses d'avoine, de gruau d'avoine, du riz, du son de riz, de rebulet de riz, de drêches de riz, de germes de riz expeller, du seigle, de rebulet de seigle, de son de seigle, du sorgho, de l'épeautre, du son d'épeautre, des cosses d'épeautre, de rebulet d'épeautre, du triticale, du blé, de rebulet de blé, de son de blé, de blé issu de malterie, de drêches de blé, de gluten feed de blé, de babassu expeller, de camelina expeller, de cosses de cacao, de tourteau de cacao, de graines de coprah, de coprah expeller, de graines de cotton, de graines de cotton expeller, de tourteau de cotton, d'arachide, de tourteau d'arachide, d'arachide expeller, de graines de kapok, de kapok expeller, de graines de lin, de lin expeller, de son de moutarde, de graines de Niger, de graines de Niger expeller, de pulpes d'olive, de tourteau de palmiste, de graines de colza, de colza expeller, de tourteau de colza, de graines de carthame, de tourteau de carthame, de cosses de carthame, de graines de sésame, de sésame expeller, de cosses de sésame, de graines de soja, de soja expeller, de tourteau de soja, de cosses de soja, de graines de tournesol, de tournesol expeller, de tourteau de tournesol, de cosses de tournesol, de graines de chanvre, de chanvre expeller, d'huile de chanvre, de caroube, de gousses de caroube, de féverole, de cosses de féverole, de tourteau de guar, de lentille, de cosses de lentille, de lupin, de cosses de lupin, de pulpe de lupin, de rebulet de lupin, de pois, de son de pois, de cosses de pois, de rebulet de pois, de pulpe de pois, de pulpes de betterave, de carottes, de pelures de carotte, de racines de carotte, de pulpes de carotte, de racines de chicorée, de mélasse de chicorée, de pulpes de chicorée, de pulpes d'oignons, d'oignons frits, de pelures de pomme de terre, de pulpes de pomme de terre, de flocons de pomme de terre, de boutures de pomme de terre, de glands, de coque de gland, d'amandes, de coques d'amande, de pulpes de pommes, de mélasses de pomme, de sarrasin, de son et balles de sarrasin, de rebulet de sarrasin, de châtaignes, de pulpes d'agrumes, de coques de café, de dattes, de pulpes de fruits, de cresson, de pépins de raisins, de tourteaux de pépins de raisins, de pulpes de raisins, de pulpes de tomates, de luzerne, de millet, de manioc, de patate douce, de panais, de topinambour, d'igname, de taro, de citrouille, de tapioca, de noix de cajou, de graines de lotus, de pistache, de niébé, de banane, de banane plantain et leurs mélanges.

5. Aliment selon une quelconque des revendications précédentes, **caractérisé en ce que** ledit amidon résistant fermentescible dans le gros intestin, est présent dans une matière première ou dans un extrait d'une matière première étant choisie dans le groupe constitué de l'orge, de rebulet d'orge, de son d'orge, de maïs, d'épis de maïs, de son de maïs, d'avoine, de rebulet d'avoine, de son d'avoine, de riz, de rebulet de riz, de son de riz, de seigle, de rebulet de seigle, de son de seigle, de sorgho, d'épeautre, de rebulet d'épeautre, de son d'épeautre, de triticale, de son de triticale, de blé, de rebulet de blé, de son de blé, de féverole, de lentille, de pois, de rebulet de pois, de noix de cajou, de châtaigne, de graines de lotus, de pistache de niébé, de pommes de terre, de sarrasin, de rebulet de sarrasin, de banane, de banane plantain, de haricot, de millet, de manioc, de tapioca, de patate douce, de panais, de topinambour, d'igname, de carotte, de taro, de citrouille et leurs mélanges.

6. Aliment selon l'une quelconque des revendications précédentes, **caractérisé en ce qu'**il présente un ratio en poids tryptophane iléal apparent / lysine iléale apparente inférieur ou égal à 0,21, de préférence inférieur ou égal à 0,17, préférentiellement inférieur ou égal à 0,15.

7. Aliment selon l'une quelconque des revendications précédentes, **caractérisé en ce qu'**il comprend une quantité en poids de protéine brute inférieure ou égale à 145 g/kg d'aliment, de préférence inférieure ou égale à 135 g/kg d'aliment, préférentiellement inférieure ou égale à 125 g/kg d'aliment.

8. Aliment selon l'une quelconque des revendications précédentes, comprenant en outre au moins un agent hépatoprotecteur choisi dans le groupe constitué de végétaux ou d'extraits de végétaux tels que Aloe barabadensis, Artemisia capillaris, Cardiospermum halicacabum, Cineraria abyssinica, Cochlospermum vitifolium, Cochlospermum angolensis, Cynara scolymus, Ficus ingens, Gentiana olivieri, Laggera pterodonta, Nelumbo nucifera, Phyllanthus amarus, Schisandra chinensis, Silybum marianum, Bauhinia variegata, Hippophae rhamnoides et leurs mélanges,

9. Procédé de fabrication d'un aliment complet selon l'une quelconque des revendications 1 à 8 comprenant l'étape d'ajout à une ration alimentaire de base d'un aliment concentré comprenant au moins un hydrate de carbone non amylacé et de l'amidon résistant fermentescible dans le gros intestin d'un animal, en particulier dans le gros intestin d'un animal de la famille de suidés.

10. Utilisation non thérapeutique d'un aliment selon l'une quelconque des revendications 1 à 8 pour favoriser la flore saccharolitique dans le gros intestin d'un animal, en particulier dans le gros intestin d'un animal de la famille des suidés.

11. Utilisation non thérapeutique d'un aliment selon l'une quelconque des revendications 1 à 8 pour réduire la problématique d'odeur liée à la présence de scatol et/ou d'androsténone et/ou d'indol, en particulier la problématique d'odeur de verrat au sein d'un élevage d'au moins un animal.

12. Procédé non thérapeutique d'administration d'un aliment selon l'une quelconque des revendications 1 à 8, **caractérisé en ce que** ledit aliment est administré en tant qu'aliment unique au moins au moins 1 semaine avant l'abattage, de préférence au moins 2 semaines avant l'abattage, de préférence au moins 3 semaines avant l'abattage, préférentiellement au moins 4 semaines avant l'abattage, à raison d'au moins 1,5 kg/porc/jour, de préférence à raison d'au moins 2 kg/porc/jour, de préférence à raison d'au moins 3 kg/porc/jour.


**Patentansprüche**

1. Alleinfuttermittel für Tiere, insbesondere Alleinfuttermittel für Tiere der Familie der Suidae, um die Geruchs- und/oder Geschmacksproblematik zu reduzieren, die mit dem Vorhandensein von Skatol und/oder Androstenon und/oder Indol zusammenhängt, insbesondere, um die Ebergeruchsproblematik zu reduzieren, wobei das Futtermittel **dadurch gekennzeichnet ist, dass** es mindestens ein Nicht-Stärke-Kohlenhydrat und resistente Stärke, die im Dickdarm fermentierbar sind, derart umfasst, dass eine Fraktion des Futtermittels, die durch das mindestens eine Nicht-Stärke-Kohlenhydrat und die resistente Stärke, die im Dickdarm fermentierbar sind, definiert ist, eine Gewichtsmenge von größer als 140 g/kg Futtermittel, vorteilhafterweise größer als 150 g/kg Futtermittel, vorzugsweise größer als 160 g/kg Futtermittel, bevorzugt größer als 170 g/kg Futtermittel, bevorzugter größer als 180 g/kg Futtermittel, noch bevorzugter größer als 190 g/kg Futtermittel darstellt, und **dadurch gekennzeichnet, dass** es weiter Leinsamen, insbesondere extrudierte Leinsamen, umfasst.

2. Futtermittel nach Anspruch 1, das mindestens 3 Gew.-% Leinsamen oder extrudierte Leinsamen, bezogen auf das Gesamtgewicht des Futtermittels, vorzugsweise mindestens 5 Gew.-%, bezogen auf das Gesamtgewicht des Futtermittels, bevorzugt mindestens 7 Gew.-%, bezogen auf das Gesamtgewicht des Futtermittels umfasst.

3. Futtermittel nach Anspruch 1 oder 2, **dadurch gekennzeichnet, dass** das mindestens eine im Dickdarm fermentierbare Kohlenhydrat ausgewählt ist aus der Gruppe bestehend aus Monosacchariden wie etwa Xylose, Mannose, Arabinose, Rhamnose und Fucose, Disacchariden wie etwa Lactose, Polyolen wie etwa Isomalt, Maltitol, Sorbitol, Xylitol und Erythritol, Oligosacchariden wie etwa Fructo-Oligosacchariden, Malto-Oligosacchariden und Galacto-Oligosacchariden, Nicht-Stärke-Polysacchariden oder Ballaststoffen wie etwa Cellulose, Glucosepolymere, Pektinstoffe, β-Glucane und Hemicellulosen wie etwa Arabinose- oder Xylose-Heteropolymere, Gummen und Fructanen wie etwa Inulin und deren Mischungen.

4. Futtermittel nach einem der vorstehenden Ansprüche, **dadurch gekennzeichnet, dass** das mindestens eine im Dickdarm fermentierbare Kohlenhydrat in einem Rohstoff oder in einem Extrakt eines Rohstoffs vorhanden ist, ausgewählt aus der Gruppe bestehend aus Gerste, Gerstendunst, Gerste aus der Mälzerei, Gerstenwürzelchen, Gerstentrebern, Gerstenkleie, Mais, Maistrebern, Maisspindeln, Maisdunst, Maiskleie, Maisglutenfutter, Maiskolben, Hafer, Haferdunst, Haferkleie, Haferschalen, Hafergrütze, Reis, Reiskleie, Reisdunst, Reistrebern, Reiskeim-Expeller, Roggen, Roggendunst, Roggenkleie, Sorghum, Dinkel, Dinkelkleie, Dinkelschalen, Dinkeldunst, Triticale, Weizen, Weizendunst, Weizenkleie, Weizen aus der Mälzerei, Weizentrebern, Weizenglutenfutter, Babassu-Expeller, Camelina-Expeller, Kakaoschalen, Kakaopresskuchen, Koprasamen, Kopra-Expeller, Baumwollsamen, Baumwollsamen-Expeller, Baumwollpresskuchen, Erdnuss, Erdnusspresskuchen, Erdnuss-Expeller, Kapoksamen, Kapok-Expeller, Leinsamen, Lein-Expeller, Senfkleie, Nigersamen, Nigersamen-Expeller, Olivenpulpen, Palmkernpresskuchen, Rapssamen, Raps-Expeller, Rapspresskuchen, Färberdistelsamen, Färberdistelpresskuchen, Färberdistelschalen, Sesamsamen, Sesam-Expeller, Sesamschalen, Sojasamen, Soja-Expeller, Sojapresskuchen, Sojaschalen, Sonnenblumensamen, Sonnenblumen-Expeller, Sonnenblumenpresskuchen, Sonnenblumenschalen, Hanfsamen, Hanf-Expeller, Hanföl, Johannisbrot, Johannisbrotschoten, Ackerbohnen, Ackerbohnenschalen, Guarbohnenpresskuchen, Linsen, Linsenschalen, Lupine, Lupinenschalen, Lupinenpulpe, Lupinendunst, Erbsen, Erbsenkleie, Erbsenschalen, Erbsendunst, Erbsenpulpe, Rübenpulpen, Karotten, Karottenschalen, Karottenwurzeln, Karottenpulpen, Zichorienwurzeln, Zichorienmelasse, Zichorienpulpen, Zwiebelpulpen, gebratenen Zwiebeln, Kartoffelschalen, Kartoffelpulpen, Kartoffelflocken, Kartoffelstecklingen, Eicheln, Eichelschalen, Mandeln, Mandelschalen, Apfelpulpen, Apfelmelassen, Buchweizen, Buchweizenkleie und -spreu, Buchweizendunst, Kastanien, Zitrusfrüchtepulpen, Kaffeeschalen, Datteln, Fruchtpulpen, Kresse, Traubenkernen, Traubenkernpresskuchen, Traubenpulpen, Tomatenpulpen, Luzerne, Hirse, Maniok, Süßkartoffel, Pastinake, Topinambur, Yamswurzel, Taro, Kürbis, Tapioka, Cashewnuss, Lotussamen, Pistazie, Langbohne, Banane, Kochbanane und deren Mischungen.

5. Futtermittel nach einem der vorstehenden Ansprüche, **dadurch gekennzeichnet, dass** die im Dickdarm fermentierbare resistente Stärke in einem Rohstoff oder in einem Extrakt eines Rohstoffs vorhanden ist, ausgewählt aus der Gruppe bestehend aus Gerste, Gerstendunst, Gerstenkleie, Mais, Maiskolben, Maiskleie, Hafer, Haferdunst, Haferkleie, Reis, Reisdunst, Reiskleie, Roggen, Roggendunst, Roggenkleie, Sorghum, Dinkel, Dinkeldunst, Dinkelkleie, Triticale, Triticale-Kleie, Weizen, Weizendunst, Weizenkleie, Ackerbohnen, Linsen, Erbsen, Erbsendunst, Cashewnuss, Kastanie, Lotussamen, Pistazie, Langbohne, Kartoffeln, Buchweizen, Buchweizendunst, Banane, Kochbanane, Bohnen, Hirse, Maniok, Tapioka, Süßkartoffel, Pastinake, Topinambur, Yamswurzel, Karotte, Taro, Kürbis und deren Mischungen.

6. Futtermittel nach einem der vorstehenden Ansprüche, **dadurch gekennzeichnet, dass** es ein Gewichtsverhältnis scheinbares ileales Tryptophan / scheinbares ileales Lysin von kleiner oder gleich 0,21, vorzugsweise kleiner oder gleich 0,17, bevorzugt kleiner oder gleich 0,15 aufweist.

7. Futtermittel nach einem der vorstehenden Ansprüche, **dadurch gekennzeichnet, dass** es eine Gewichtsmenge an Rohprotein von kleiner oder gleich 145 g/kg Futtermittel, vorzugsweise kleiner oder gleich 135 g/kg Futtermittel, bevorzugt kleiner oder gleich 125 g/kg Futtermittel umfasst.

8. Futtermittel nach einem der vorstehenden Ansprüche, das weiter mindestens einen hepatoprotektiven Wirkstoff umfasst, ausgewählt aus der Gruppe bestehend aus Pflanzen oder Pflanzenextrakten, wie etwa Aloe barabadensis, Artemisia capillaris, Cardiospermum halicacabum, Cineraria abyssinica, Cochlospermum vitifolium, Cochlospermum angolensis, Cynara scolymus, Ficus ingens, Gentiana olivieri, Laggera pterodonta, Nelumbo nucifera, Phyllanthus amarus, Schisandra chinensis, Silybum marianum, Bauhinia variegata, Hippophae rhamnoides und deren Mischungen.

9. Verfahren zur Herstellung eines Alleinfuttermittels nach einem der Ansprüche 1 bis 8, das den Schritt des Zugebens eines konzentrierten Futtermittels, das mindestens ein Nicht-Stärke-Kohlenhydrat und im Dickdarm eines Tieres fermentierbare, insbesondere im Dickdarm eines Tieres der Familie der Suidae fermentierbare resistente Stärke umfasst, zu einer Basisfutterration umfasst.

10. Nicht-therapeutische Verwendung eines Futtermittels nach einem der Ansprüche 1 bis 8 zur Unterstützung der saccharolytischen Flora im Dickdarm eines Tieres, insbesondere im Dickdarm eines Tieres der Familie der Suidae.

11. Nicht-therapeutische Verwendung eines Futtermittels nach einem der Ansprüche 1 bis 8, um die Geruchsproblematik, die mit dem Vorhandensein von Skatol und/oder Androstenon und/oder Indol zusammenhängt, insbesondere die Ebergeruchsproblematik in einer Zucht mindestens eines Tieres zu reduzieren.

12. Nicht-therapeutisches Verfahren zur Verabreichung eines Futtermittels nach einem der Ansprüche 1 bis 8, **dadurch gekennzeichnet, dass** das Futtermittel mindestens 1 Woche vor der Schlachtung, vorzugsweise mindestens 2 Wochen vor der Schlachtung, vorzugsweise mindestens 3 Wochen vor der Schlachtung, bevorzugt mindestens 4 Wochen vor der Schlachtung, mit mindestens 1,5 kg/Schwein/Tag, vorzugsweise mit mindestens 2 kg/Schwein/Tag, vorzugsweise mit mindestens 3 kg/Schwein/Tag als einziges Futtermittel verabreicht wird.

**Claims**

1. Complete feed for animals, in particular complete feed for animals of the Suidae family, to reduce problems of smell and/or flavour linked to the presence of skatole and/or androstenone and/or indole, in particular for reducing the problem of boar taint, said feed being **characterised in that** it comprises at least one non-starch carbon hydrate and resistant starch which are fermentable in the large intestine, such that a fraction of said feed defined by said at least one non-starch carbon hydrate and said resistant starch which are fermentable in the large intestine represents a quantity by weight greater than 140g/kg of feed, advantageously greater than 150g/kg of feed, preferably greater than 160kg/g of feed, preferably greater than 170g/kg of feed, more preferably greater than 180g/kg of feed, more preferably still greater than 190g/kg of feed, and **characterised in that** it further comprises flax seeds, in particular extruded flax seeds.

2. Feed according to claim 1 comprising at least 3% by weight of flax seeds or extruded flax seeds with respect to the total weight of the feed, preferably at least 5% by weight with respect to the total weight of the feed, preferably at least 7% by weight with respect to the total weight of the feed.

3. Feed according to claim 1 or 2, **characterised in that** said at least one carbon hydrate which is fermentable in the large intestine, is chosen from the group consisting of monosaccharides such as xylose, mannose, arabinose, rhamnose and fucose, disaccharides such as lactose, polyols such as isomalt, maltitol, sorbitol, xylitol and erythritol, oligosaccharides such as fructo-oligosaccharides, malto-oligosaccharides, galacto-oligosaccharides, non-starch polysaccharides or food fibres such as cellulose, glucose polymers, pectic substances, β-glucanes and hemicelluloses, like arabinose or xylose heteropolymers, gums and fructanes like inuline and their mixtures.

4. Feed according to any one of the preceding claims, **characterised in that** said at least one carbon hydrate which is fermentable in the large intestine is present in a raw material or in an extract of a raw material being chosen from the group consisting of barley, barley feed and bran, barley from malting, barley culms, barley grain, barley bran, maize, maize culms, maize stalks, maize feed and bran, maize bran, maize gluten feed, maize ears, oat, oat feed and bran, oat grain, oat husks, oat gruel, rice, rice bran, rice feed and bran, rice culms, expeller rice seeds, rye, rye feed and bran, rye bran, sorghum, spelt, spelt bran, spelt husks, spelt feed and bran, triticale, wheat, wheat feed and bran, wheat bran, wheat from malting, wheat culms, wheat gluten feed, expeller babassu, expeller camelina, cocoa husks, cocoa cake, copra seeds, expeller copra, cotton seeds, expeller cotton seeds, cotton cake, groundnut, groundnut cake, expeller groundnut, kapok seeds, expeller kapok, flax seeds, expeller flax, mustard bran, Niger seeds, expeller Niger seeds, olive pulps, palm kernel cake, colza seeds, expeller colza, colza cake, safflower seeds, safflower cake, safflower husks, sesame seeds, expeller sesame, sesame husks, soya seeds, expeller soya, soya cake, soya husks, sunflower seeds, expeller sunflower, sunflower cake, sunflower husks, hemp seeds, expeller hemp, hemp oil, carob, carob pods, beans, bean husks, guar cake, lentils, lentil husks, lupin, lupin husks, lupin pulp, lupid feed and bran, peas, pea bran, pea husks, pea feed and bran, pea pulp, beet pulps, carrots, carrot peel, carrot roots, carrot pulps, chicory roots, chicory syrup, chicory pulps, onion pulps, fried onions, potato peel, potato pulps, potato flakes, potato cuttings, acorns, acorn shell, almonds, almond shells, apple pulps, apple syrup, buckwheat, buckwheat bran and balls, buckwheat feed and bran, chestnuts, citrus pulps, coffee shells, dates, fruit pulps, watercress, grape seeds, grape seed cakes, grape pulps, tomato pulps, alfalfa, millet, cassava, sweet potato, parsnip, Jerusalem artichoke, yam, taro, pumpkin, tapioca, cashew, lotus seeds, pistachio, cowpea, banana, plantain banana and their mixtures.

5. Feed according to any one of the preceding claims, **characterised in that** said resistant starch which is fermentable in the large intestine, is present in a raw material or in an extract of a raw material being chosen from the group consisting of barley, barley feed and bran, barley bran, maize, maize stalks, maize bran, oat, oat feed and bran, oat bran, rice, rice bran, rice feed and bran, rice bran, rye, rye feed and bran, rye bran, sorghum, spelt, spelt feed and bran, spelt bran, triticale, triticale bran, wheat, wheat feed and bran, wheat bran, beans, lentils, peas, pea feed and bran, cashew, chestnut, lotus seeds, pistachio, cowpea, potatoes, buckwheat, buckwheat feed and bran, banana, plantain banana, green beans, millet, cassava, sweet potato, parsnip, Jerusalem artichoke, yam, carrot, taro, pumpkin and their mixtures.

6. Feed according to any one of the preceding claims, **characterised in that** it has an apparent ileal tryptophan / apparent ileal lysine ratio by weight of less than or equal to 0.21, preferably less than or equal to 0.17, preferably less than or equal to 0.15.

7. Feed according to any one of the preceding claims, **characterised in that** it comprises a quantity by weight of raw protein less than or equal to 145g/kg of feed, preferably less than or equal to 135g/kg of feed, preferably less than or equal to 125g/kg of feed.

8. Feed according to any one of the preceding claims, further comprising at least one hepatoprotective agent chosen from the group consisting of plants or plant extracts such as Aloe barabadensis, Artemisia capillaris, Cardiospermum halicacabum, Cineraria abyssinica, Cochlospermum vitifolium, Cochlospermum angolensis, Cynara scolymus, Ficus ingens, Gentiana olivieri, Laggera pterodonta, Nelumbo nucifera, Phyllanthus amarus, Schisandra chinensis, Silybum marianum, Bauhinia variegata, Hippophae rhamnoides and their mixtures.

9. Method for manufacturing a complete feed according to any one of claims 1 to 8, comprising the step of adding a feed ration with the basis of a concentrated feed comprising at least one non-starch carbon hydrate and resistant starch which is fermentable in the large intestine of an animal, in particular in the large intestine of an animal from the Suidae family.

10. Non-therapeutic use of a feed according to any one of claims 1 to 8, to favour the saccharolitic flora in the large intestine of an animal, in particular in the large intestine of an animal of the Suidae family.

11. Non-therapeutic use of a feed according to any one of claims 1 to 8, to reduce problems of smell linked to the presence of skatole and/or androstenone and/or indole, in particular the problem of boar taint within a rearing of at least one animal.

12. Non-therapeutic method for administering a feed according to any one of claims 1 to 8, **characterised in that** said feed is administered as a unique feed at least 1 week before slaughter, preferably at least 2 weeks before slaughter, preferably at least 3 weeks before slaughter, preferably at least 4 weeks before slaughter, at a rate of at least 1.5kg/pork/day, preferably at a rate of at least 2kg/pork/day, preferably at a rate of at least 3kg/pork/day.

*F i g . 1*

*F i g . 2*

*Fig.3*

Fig.4

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1610623 A

**Littérature non-brevet citée dans la description**

- **OVERLAND.** *Livestock Science,* 2011, 206-217
- **KNARREBORG.** *Animal Science,* 2002, 445-453
- **HANSEN.** *Meat Science,* 2008, vol. 80, 1165-1173
- *Anal. Chem.,* 2011, vol. 83, 6785-6791